# NEUE EUROPÄISCHE PATENTSCHRIFT

(11) **EP 0 270 531 B2**
(45) Veröffentlichungstag und Bekanntmachung des Hinweises auf die Entscheidung über den Einspruch: **31.03.1993**
(45) Hinweis auf die Patenterteilung: 08.11.1989
(21) Anmeldenummer: 86904177.2
(22) Anmeldetag: 23.07.1986
(51) Int. Cl.: B01J 8/12, B01D 46/34, B01D 53/08

(54) **WANDERBETTREAKTOR**
MOVING BED REACTOR
REACTEUR A LIT MOBILE

(30) Priorität: 06.08.1985 DE 3528222
(43) Veröffentlichungstag der Anmeldung: 15.06.1988
(73) Patentinhaber: GROCHOWSKI, Horst, D-46117 Oberhausen (DE); Bergwerksverband GmbH, D-45307 Essen (DE)
(72) Erfinder: GROCHOWSKI, Horst, D-46117 Oberhausen (DE); Bergwerksverband GmbH, D-45307 Essen (DE)
(74) Vertreter: Schumacher, Horst, Dr. Dipl.-Phys.
(86) Internationale Anmeldenummer: EP8600435
(87) Internationale Veröffentlichungsnummer: WO8700768

(56) Entgegenhaltungen:
- DE-A- 2 342 842
- DE-A- 2 448 904
- DE-A- 3 228 984
- DE-C- 883 598
- US-A- 1 095 676
- US-A- 2 148 946
- US-A- 2 423 013
- US-A- 2 816 010
- US-A- 2 846 370
- US-A- 2 846 370
- US-A- 2 882 912
- US-A- 2 946 132

## Beschreibung

Die Erfindung betrifft einen Wanderbettreaktor zum Behandeln von, insbesondere feststoffpartikelbelasteten - wie z. B. staubbelasteten - und/oder korrosiv wirkenden Fluiden mittels eines Schüttgutes, wie z. B. eine Aktivkohle, eines Kohlestoffmolekularsiebes oder eines Katalysators im Gegenstromverfahren, bei dem das Schüttgut von oben nach unten wandert und das Fluid kontinuierlich von unten nach oben strömt, bestehend aus
a) einem mit dem Schüttgut gefüllten, im wesentlichen geraden, vorzugsweise zylindrischen, Behälter, insbesondere mit rundem, z. B. kreisförmigem, oder eckigem, z. B. rechteckigem, Querschnitt, mit mindestens einer deckseitigen verschliessbaren Einlassöffnung zum Zuführen des Schüttgutes, und mindestens einer bodenseitigen verschliessbaren Auslassöffnung zum Abführen des Schüttgutes sowie einem Fluidzuführrohr und einem Fluidabführrohr
b) einem Anströmboden oberhalb des Fluidzuführrohres mit über den Behälterquerschnitt rasterförmig, insbesondere gleichmässig verteilten Dächer, insbesondere jalousieartige Dächer, bildenden Trichtern oder Rinnen mit fluid durchlässige Öffnungen aufweisenden Trichterwänden und mit bodenseitigen Öffnungen für das Abziehen des Schüttgutes, und
c) einem Schüttgutverteilboden unmittelbar oberhalb des Fluidabführrohres mit über den Behälterquerschnitt rasterförmig verteilten Öffnungen für das Zuteilen (Zuteilöffnungen) des Schüttgutes,
d) bei dem an die Zuteilöffnungen Schüttgutzuteilrohre oder -schächte (30) angesetzt sind, die in gleichem Abstand über dem Anströmboden (16) enden und deren untere Mündungsöffnungen Schüttkegelspitzen oder -firste (32) der Wanderschicht (34) definieren, wobei die Unterseite des Schüttgutverteilbodens (28) zusammen mit den Schüttgutzuteilrohren oder -schächten (30) einen Abströmraum (33) definieren.

Ein solcher Wanderbettreaktor soll in verschiedenen chemisch-technischen Prozessen einsetzbar sein, z. B. bei der adsorptiven Reinigung von Gasen, wie den Abgasen von Kraftwerken, an kohlenstoffhaltigen Adsorptionsmitteln wie Aktivkohlen oder Kohlenstoffmolekularsieben. Ein anderer Einsatzbereich ist die Filtration von schwer abscheidbaren Stäuben durch Adhäsion an dem Schüttgut, z. B. von Feinstäuben, die durch Elektrofilter nichtoder nurschwerabscheidbarsind, wie sie z. B. bei Kraftwerken, in Röstanlagen und dgl. auftreten, oder von wegen ihrer schweren Benetzbarkeit in Nassabscheidern oder Nasswäschern schlecht abscheidbaren Partikeln. Ein anderer Einsatzbereich ist die Katalysatorbehandlung von Fluiden mittels schüttfähiger Katalysatoren, die auch diskontinuierlich durch den Wanderbettreaktor wandern können. Als weiterer Einsatzbereich kommt die Behandlung korrosiver, insbesondere Halogene enthaltender, Fluide in Frage. Der Wanderbettreaktor kann aber auch z. B. als Wärmeaustauscher bei Regenerationsprozessen von Schüttgütern eingesetzt werden, bei der insbesondere hohe Schadstoffkonzentrationen auftreten und ein Fluid, das aufgeheizt werden muss, im Kreislauf geführt wird. Für solche Prozesse werden z. B. sogenannte Papple-Heater eingesetzt, bei denen als Wärmeträger z. B. Keramikkugeln, insbesondere aus A1₂0₃ bei hohen Temperaturen und/ oder in sehr aggressiver Umgebung kontinuierlich in einem Kreislauf geführt werden. Diese Aufzählung ist nicht vollständig und nur beispielhaft zu verstehen.

Aus der DE-A 3228984 ist ein Wanderbettreaktor bekannt, der zum Reinigen von Gas und/oder dampfförmigen Medien, insbesondere als Adsorptionsfilter mit vorzugsweise diskontinuierlicher Strömung des Schüttgutes fürzu filternde Kraftwerkabgase dient. Bei diesem bekannten Wanderbettreaktor werden die Fluide über parallel im Behälteroberbereich verlaufende, mit Öffnungen versehene Rohre abgeführt, wobei diese Rohre Bestandteile symmetrischer Fiiessieitkörper sind, welche von dem Schüttgut « umwandert » werden und dem Schüttgut einen möglichst geringen « Strömungs »-Widerstand bieten sollen. Die unteren Spitzen dieser Fliessleitkörper befinden sich exakt über den Dachspitzen oder -firsten, welche der Anströmboden aufweist. Auf diese Weise ist die von dem Fluid durchströmte Schüttgutschichtdicke über den Querschnitt des Wanderschichtreaktors nicht gleichmässig hoch. Weiterhin ist die Gasverteilung des Anströmbodens auf wenige Jalousieschlitze beschränkt, so dass die Vergleichmässigung der Fluidströmung in der Schüttgutschicht erst allmählich erfolgt Beides ist von Nachteil für eine effektive Fluidbehandlung und die Effektivität der Kapazitätsausnutzung des Schüttgutes. Es ist daher schwer, reproduzierbare Behandlungsergebnisse zu erzielen, und es muss deshalb mit Sicherheitszuschlägen bei der Höhe der Schüttgutschicht gearbeitet werden. Höhere Schüttgutschichten erhöhen aber den Strömungswiderstand und verteuern damit das Verfahren. Ein weiterer Nachteil ist in der Gasabführeinrichtung dieses bekannten Wanderbettreaktors zu sehen, da die dafür dienenden parallelen Rohre in ihrer Abmessung durch die Strömungsanforderungen an die Fliessleitkörper genau festgelegt sind. In diesen Rohren baut sich zwangsläufig ein Druckgradient auf, der sich als unterschiedlich hoher Gegendruck für das zu behandelnde Fluid an der Schüttgutschichtoberseite auswirkt. Die Schüttgutschicht wird daher über den Behälterquerschnitt nicht gleichmässig von dem Fluid durchströmt - eine exakte Vorhersagbarkeit oder gar Einstellbarkeit des Behandlungsergebnisses ist daher nicht möglich. Schliesslich sind unmittelbar unter den bodenseitigen Öffnungen im Anströmboden für das Abziehen des Schüttgutes die Absperrorgane für das diskontinuierliche Abziehen des Schüttgutes angeordnet. Um diese Absperrorgane zu betätigen, muss daher der Fluidstrom unterbrochen werden, da die beweglichen Teile der Absperrorgane unter der Aggressivität und/oder der Feststoffbelastung der zu behandelnden Fluide, insbesondere bei hohen Temperaturen, allzu schnell verschleissen würden. Das Öffnen der Absperrorgane bei fortdauernder Fluidströmung würde ausserdem dazu führen, dass die bei diesem Vorgang von den Schüttgutpartikeln ablösenden Feststoffpartikel von dem aufwärtsströmenden Fluid mitgerissen und in die Wanderschicht wieder eingetragen würden; dies führt zum allmählichen Zusetzen der Wanderschicht.

Aus der US-Patentschrift 2 445 092 ist ein Wärmeübertragungsverfahren bekannt, bei dem ein festes, gekörntes Gut in einem ähnlichen wie dem gattungsgemässen Behälter von einem Fluid durchströmt werden kann. Im Unterschied zu dem gattungsgemässen Behälter wird als Anströmboden jedoch ein ebener Boden mit dazu sich senkrecht erstreckenden, Querbohrungen aufweisenden, oben mit Kappen versehenen Rohren für die Fluidzufuhrverwendet; dabei sind in einem Rohr mehrere Bohrungen übereinander angeordnet, so dass die Fluidströmungswege durch die durchströmte Granulatschicht unterschiedlich lang sind. Bei dieser bekannten Vorrichtung sind an dem Schüttgutverteilboden und dem Anströmboden Schüttgutzuteil- bzw. Schüttgutabführrohre vorgesehen, die vertikal übereinander angeordnet sind. Diese bekannte Vorrichtung weist im wesentlichen die gleichen Nachteile auf, die im Zusammenhang mit der DE-A 32 28 984 beschrieben wurden. Zwar wird bei der US-A 2 445 092 die Gasabführung im Vergleich zur DE-A 32 28 984 verbessert, doch wird dieser Vorteil durch den erheblich ungünstiger gestalteten Anströmboden mehr als kompensiert. Bei diesem Anströmboden ist nicht nur die Fluidverteilung ungünstig, sondern auch der Feststoffabzug, da sich um die Schüttgutabführrohre herum zwangsläufig nicht wandernde Schüttgutkegel bilden; hierdurch, wie auch durch die unterhalb der Schüttgutabführrohre gebildeten Schüttgutkegel, entstehen undefinierte Strömungswiderstände für das Fluid. Ausserdem ist eine gleich lange Behandlung aller Schüttgutpartikel mit dem Fluid aufgrund unterschiedlicher Verweilzeiten der Schütgutpartikel im Reaktor nicht gewährleistet.

Aus der US-A 2 846 370 ist ein Wanderbettreaktor bekannt, bei dem zur Umwandlung höher siedender Kohlenwasserstoffe zu niedriger siedenden Kohlenwasserstoffen an Katalysatoren in einem einzigen Reaktor sowohl im Gegen- als auch im Gleichstrom gearbeitet werden kann, indem die Beaufschlagungsstelle etwa in der Reaktormitte angeordnet und als Anströmboden ausgebildet ist. Von dort strömt eine Teilmenge des zu behandelnden Gases im Gleichstrom mit der nach unten wandernden Katalysatorschüttung nach unten, während der zweite Teilstrom im Gegenstrom zum Katalysatorbett nach oben strömt, wo ein Abströmraum vorgesehen ist, der von der Unterseite des Schüttgutverteilbodens in Verbindung mit an diesem nach unten ansetzenden gleich langen Schüttgutzuteilrohren und der an deren Mündungsöffnungen sich ausprägenden, Schüttkegelspitzen bildenden Schüttgutoberfläche definiert ist. Die Anzahl und Verteilung der Schüttgutzuteilrohre einerseits und der Schüttgutabführrohre andererseits wird so gewählt, dass sich eine möglichst gleichmässige Temperaturverteilung im Reaktor einstellt. Zu diesem Zweck ist die Anzahl der Schüttgutzuteilrohre einerseits und der Schüttgutabführöffnungen andererseits sehr verschieden voneinander. Dies hat über den Reaktorquerschnitt stark schwankende Schichthöhen der wirksamen Katalysatorschicht zur Folge.

Davon ausgehend liegt der Erfindung die Aufgabe zugrunde, bei einem Wanderbettreaktor der eingangs genannten Art eine möglichst gleichmässige Durchströmung der Wanderschicht mit dem Fluid über den gesamten Behälterquerschnitt zu gewährleisten, dass also die Verweilzeiten aller Fluidteilströme in der Wanderschicht trotz möglichst grosser Behälterquerschnitte, möglichst auch bei kleinen Fluidgeschwindigkeiten, gleich lang sind, wobei das Abziehen der Schüttgutpartikel aus der Wanderschicht ohne Unterbrechung der Fluidströmung problemlos möglich sein soll, insbesondere soll es möglich sein, durch einen einzigen Wanderbettreaktor grosse Gasmengen je Zeiteinheit durchzusetzen und trotzdem geringe Gasströmmungsgeschwindigkeiten in der Wanderschicht selbst zu realisieren. Vorzugsweise soll ein möglichst grosses Verhältnis von wirksamem Behälterquerschnitt zur wirksamen Wanderschichthöhe möglich sein, wie es sonst nur bei quer angeströmten Wanderbettreaktoren möglich ist; fernerhin sollte der Feststofffluss der Schüttgutpartikel möglichst kontinuierlich sein, d. h. ein kontinuierlicher Feststoffabzug realisiert werden, damit die Verweilzeiten der einzelnen Feststoffpartikel in der Wanderschicht möglichst gleich gross sind; der Wanderbettreaktor sollte insbesondere auch fürstaubbelastete Gase und auch dann mit möglichst niedrigen wirksamen Wanderschichthöhen einsetzbar sein; die Schüttgutpartikel sollten in dem Wanderbettreaktor möglichst schonend behandelt werden, ihre Behandlungskapazität sollte maximal nutzbar sein - möglichst auch dann, wenn eine besonders vollständige Fluidbehandlung angestrebt wird; schliesslich sollte der Druckverlust des Fluides in der Wanderschicht möglichst gering und die Gleichmässigkeit der Fluidverteilung möglichst hoch sein, insbesondere sollte die freie Fluiddurchtrittsfläche durch den Anströmboden so gross wie möglich sein.

Zur Lösung dieser Aufgabe wird ein gattungsgemässer Wanderbettreaktor mit den kennzeichnenden Merkmalen des Anspruchs 1 vorgeschlagen, die darin bestehen, dass die Schüttgutzuteilrohre oder-schächte (30) in der Wanderrichtung des Schüttgutes (10) gesehen oberhalb der Dachspitzen oder-firsten (22) der Dächer des Anströmbodens (16) münden wobei die Schichthöhe der wirksamen Wanderschicht über den gesamten Behälterquerschnitt im wesentlichen gleich hoch ist.

Mit der Erfindung werden u. a. folgende Vorteile erreicht:
- durch die an die Zuteilöffnungen angesetzten Rohre oder Schächte (gemäss Merkmal d) kann ein praktisch beliebig grossvolumiger Abströmraum geschaffen werden, so dass auch bei einseitig angeordnetem Fluidabzug sich oberhalb der Wanderschicht keine unterschiedlich hohen Fluiddrücke über den Behälterquerschnitt aufbauen können, was zur Vergleichmässigung der Fluidteilströme durch die Wanderschicht beiträgt
- diese Vergleichmässigung aufgrund einer über den gesamten Behälterquerschnitt gleich grossen Druckdifferenz wird auch durch den Anströmkasten unterhalb des Anströmbodens, insbesondere gemäss Anspruch 2, unterstützt, weil auch die dortigen Schüttgutabführrohre oder-schächte praktisch beliebig lang und dementsprechend der Anströmkasten praktisch beliebig grossvolumig sein können; in dem Anströmkasten und dem Abströmraum kann also die Strömungsgeschwindigkeit des Fluides auch dann sehr gering gehalten werden, wenn der Behälterquerschnitt besonders gross und die Strömungsgeschwindigkeit des Fluides durch die Schüttgutschicht so gross wie maximal möglich gewählt sind ;
- durch die Anordnung der Schüttgutzuteilrohre oder -schächte oberhalb der Dachspitzen oder -firste des Anströmbodens (gemäss Merkmal e) wird eine so gut wie völlig gleichmässige wirksame Wanderschichthöhe über dem gesamten Behälterquerschnitt möglich. Die von den Schüttgutabzugsöffnungen im Anströmboden hervorgerufenen natürlichen Senken an derWanderschichtoberseite werden also bewusst aufrechterhalten, wobei die sich an der Wanderschichtoberseite bildenden Schüttkegelspitzen als Verschluss der Schüttgutzuteilrohre oder -schächte dienen, so dass ohne bewegte Teile, allein aufgrund der Schwerkraft, die Schüttgutzuteilung automatisch in dem Umfang erfolgt, wie verbrauchtes Schüttgut am Anströmboden abgezogen wird; in Verbindung mit den Schüttgutabführrohren oder -schächten (gemäss Anspruch 2) und den Schüttgutzuteilrohren oder -schächten (gemäss Merkmal d), die beliebig dicht verteilt in dem Wanderschichtreaktor angeordnet werden können, kann die Welligkeit an der wanderschichtober- und unterseite im Vergleich zur Schichthöhe sehr gering gehalten werden, was zur Vergleichmässigung der Fluidströmung beiträgt; dies ist von besonderem Vorteil für die gleichmässige Belastung der einzelnen Schüttgutpartikel, insbesondere bei der Behandlung staubbelasteter Gase.

Durch den fluiddichten Behälter(zwischen)boden gemäss Anspruch 2 werden sämtliche zum Abführen der Schüttgutpartikel erforderliche bewegliche Teile von dem noch unbehandelten Fluid ferngehalten, so dass diese weder durch von dem Fluid mitgeführte Feststoffe oder aggressive Medien noch durch hohe Temperaturen belastet sind und die für die Fluidbehandlung wesentlichen Teile des Wanderschichtreaktors aus einfachen widerstandsfähigen Teilen, insbesondere auch Keramikteilen, bestehen können. Ausserdem werden die am Anströmboden anstehenden Fluiddrücke durch den Behälter(zwischen) boden besonders gut definierbar.

Ein besonders geringer Druckverlust im Anströmboden wird (gemäss Anspruch 3) dadurch erreicht, dass die Schüttgutabführrohre oder-schächte zwei im wesentlichen vertikal übereinander angeordnete, zwischen sich Fluidzuströmöffnungen freilassende, Teilbereiche aufweisen, von denen die unteren sich nach oben trichterförmig erweitern, hierdurch können freie Gasdurchtrittsflächen durch den Anströmboden von mehr als 50%, bezogen auf die Behälterquerschnittsfläche, im Gegensatz von maximal 30 bis 35% bei dem gattungsgemässen Anströmboden erreicht werden. Hierdurch wird auch die Gefahr eines Zusetzens der Schüttgutabzugsöffnungen vermindert, weil die Fluidgegenströmung im oberen Teilbereich der Schüttgutabführrohre oder -schächte eine gewisse Auflockerung der Schüttgutschicht bewirkt. Es versteht sich, dass sich die Fluidzuströmöffnungen im Bereich des Antrömkastens befinden.

Eine oberhalb des Schüttgutverteilbodens (gemäss Anspruch 4) und/oder eine unterhalb des Bodens des Anströmkastens (gemäss Anspruch 5) angeordnete Schüttgutschleusenkammer ermöglichen eine kontinuierliche oder quasi kontinuierliche Schüttgutzuteilung und -abfuhr, ohne dass dafür der Fluidstrom abgestellt werden muss.

Wenn die Schüttgutabführrohre oder -schächte dicht oberhalb eines Horizontalförderers (gemäss Anspruch 6) münden, der innerhalb der unteren Schüttgutschleusenkammer angeordnet ist - wenn eine solche vorgesehen sein sollte -, kann auf einfache Weise ein kontinuierlicher, regelbarer Schüttgutabzug erfolgen, weil sich auf dem Horizontalförderer, z. B. einem Förderband, kleine Schüttgutkegel in gleicher Weise wie an der Wanderschichtoberseite bilden, die einen Verschluss der Schüttgutabführrohre oder -schächte bilden. Bei horizontaler Bewegung des Förderers werden diese Schüttgutkegel abtransportiert und Schüttgut kann entsprechend der Fördergeschwindigkeit nachrutschen. Wenn ein Horizontalförderer mehreren Schüttgutabführrohren oder -schächten zugeordnet ist, empfielht es sich, die Förderrichtung und die Richtung der hintereinander angeordneten Schüttgutabführrohre oder-schächte in einem geringen Winkel zueinander anzuordnen, so dass jedem Schüttgutabführrohr oder -schacht ein ansonsten unbelegter Bereich des Horizontalförderers zugeordnet ist. Bei im Querschnitt quadratischen oder kreisförmigen Wanderbettreaktoren kann auch eine rotierende horizontal ausgerichtete Scheibe mit einem dieser zugeordneten Schüttgutabstreifer verwendet werden.

Wenn eine Fluidpumpe zur Aufrechterhaltung der Fluidströmung in Wanderschichtreaktor (gemäss Anspruch 7) in dem Fluidabführrohr angeordnet ist, wird die Fluidpumpe nur mit bereits behandeltem Fluid beaufschlagt und frei von unerwünschten Feststoffpartikeln oder aggressiven Medien gehalten. Eine solche Fluidpumpe, wie z. B. ein Gebläse, ist in der Regel erforderlich, da der Druckverlust in der Wanderschicht ausgeglichen werden muss.

Die vorgenannten, erfindungsgemäss zu verwendenden Bauteile unterliegen in ihrer Grösse, Formgestaltung, Materialauswahl und technischen Konzeption keinen besonderen Ausnahmebedingungen, so dass die in dem jeweiligen Anwendungsgebiet bekannten Auswahlkriterien uneingeschränkt Anwendung finden können.

Weitere Einzelheiten, Vorteile und Merkmale des Gegenstandes der Erfindung ergeben sich aus der nachfolgenden Beschreibung der zugehörigen Zeichnung, in der zwei bevorzugte Wanderschichtreaktoren dargestellt worden sind. In der Zeichnung zeigen:
Fig. 1 einen Wanderbettreaktor im Vertikalschnitt;
Fig. 2 an demselben Wanderbettreaktor die Ansicht des Anströmkastens von unten - Ansicht A gemäss Fig. 1 - sowie
Fig. 3 von einem runden Wanderschichtreaktor ebenfalls die Ansicht des Anströmkastens von unten - wie in Fig. 2.

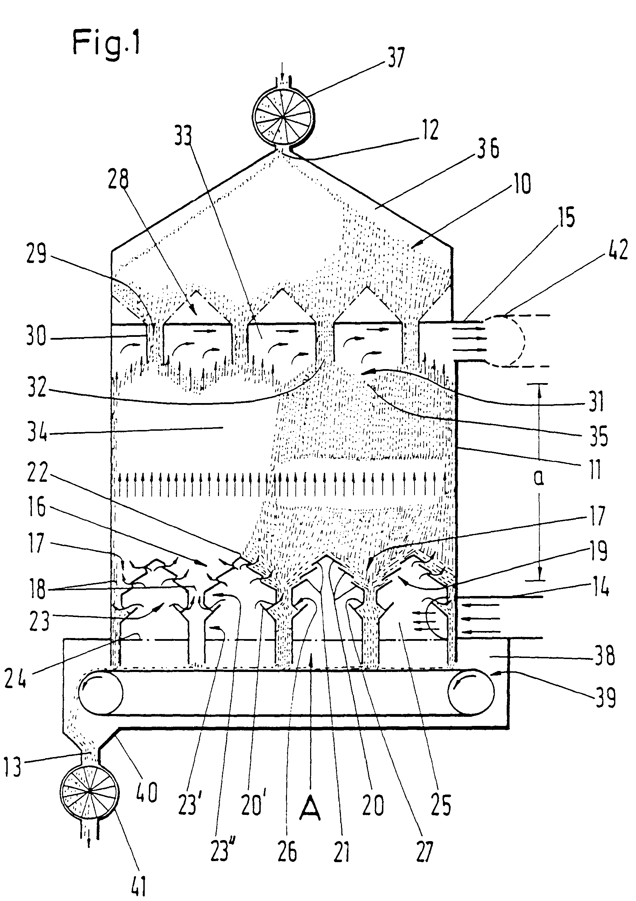

Ein Wanderbettreaktor, z. B. zum Reinigen von Kraftwerksabgasen an Aktivkohlen, besteht aus einem mit dem Schüttgut 10 (Aktivkoks) gefüllten, im wesentlichen geraden zylindrischen - hier im Querschnitt rechteckigen - Behälter 11 mit mindestens einer deckseitigen, verschliessbaren Einlassöffnung 12 zum Zuführen des Schüttgutes 10 und mindestens einer bodenseitigen, verschliessbaren Auslassöffnung 13 zum Abführen des Schüttgutes 10 sowie mindestens einem am Behälter unten angeordneten Fluidzuführrohr 14 und mindestens einem oben am Behälter 10 angeordneten Fluidabführrohr 15. Oberhalb des Fluidzuführrohres 14 ist ein Anströmboden 16 in den Behälter eingebaut und bedeckt dessen gesamten Querschnitt. Der Anströmboden 16 besteht aus « rasterförmig » über den Behälterquerschnitt gleichmässig verteilten Trichtern oder - wie in Fig. 1 - Rinnen 17 mit bodenseitigen Öffnungen 18 für das Abziehen des Schüttgutes. Die Rinnen 17 verlaufen parallel zueinander über die gesamte Behälterlänge; sie weisen entweder beidseitig jalousieartig ausgebildete Trichterwände 19 auf oder werden von einer solchen jalousieartigen Trichterwand und einer Behälterseitenwand gebildet - wenn sie sich unmittelbar an der Behälterseitenwand befinden. Wie üblich, können die Trichterwände zur jalousieartigen Gestaltung aus längs der Trichterwand verlaufenden parallelen Flachstäben aus Metall oder Keramikmaterial bestehen; sie sind an ihren Längskanten unter Freilassung von Fluideinlassschlitzen seitlich beabstandet und - von oben betrachtet - vorzugsweise leicht überlappend angeordnet, um einen Eintritt von Schüttgutpartikeln in die Fluideinlassschlitze sicher zu unterbinden. Die Trichterwände 19 benachbarter Trichter oder Rinnen 17 bilden miteinander jeweils ein kleines Dach, dessen Dachspitze oder Dachfirst 22 von zwei benachbarten Flachstäben gebildet sein kann. Im übrigen können die Trichterwände auch anders als jalousieförmig ausgeführt sein und anders ausgebildete fluiddurchlässige Öffnungen aufweisen; wobei ihre Neigung den sogenannten Reibungswinkel des verwendeten Schüttgutes berücksichtigt.

Die Anzahl und Beabstandungen derfluiddurchlässigen Öffnungen, insbesondere der Fluideinlassschlitze 21, wird so gewählt, dass die Trichterwände 19 einerseits ausreichend stabil sind und andererseits eine möglichst ausgeprägte Fluidverteilung über dem Behälterquerschnitt erreicht wird.

Eine bestmögliche Schonung der Schüttgutpartikel wird durch Abschrägen der dem Schüttgut zugewandten Kanten der Flachstäbe 20 erreicht, was in der Zeichnung nicht näher dargestellt ist, wobei die dadurch gebildeten Phasenflächen (Abschrägungsflächen) aller Flachstäbe einer Trichterwand in einer gemeinsamen Ebene liegen sollten, die mit dem Schüttgutkegel des Schüttgutes im Trichter oder der Rinne 17 im wesentlichen identisch ist. Gegenüber dieser Ebene sind die einzelnen Flachstäbe 20 um einen Winkel von z. B. 15° flacher geneigt, um die Randüberlappungen der Flachstäbe unter Freilassung der Fluideinlassschlitze zu ermöglichen.

An die Trichter oder Rinnen 17 sind Schüttgutabführrohre bzw. -schächte 23 angesetzt; sie sind durch einen unterhalb des Fluidzuführrohres 14 in dem Behälter 11 angeordneten, in Figur 1 strichpunktiert eingezeichneten Boden 24 fluiddicht geführt und definieren, gemeinsam mit den Trichtern oder Rinnen 17 und den angrenzenden Seitenwandbereichen des Behälters 11 ein sich über den gesamten Behälterquerschnitt erstreckenden Anströmkasten 25. An diesem wird das Fluid über das Fluidzuführrohr 14 zugeführt; es verlässt ihn wieder über die Fluideinlassschlitze - wie mit Strömungspfeilen bei einem Teil der Fluideinlassschlitze dargestellt; der Übersichtlichtkeit halber wurde aber nicht an jedem Fluideinlassschlitz ein Strömungspfeil angebracht. Der Boden 24 kann - gemäss der allgemeineren Ausführungsform der Erfindung - entfallen, so dass der Anströmkasten dann entsprechend grösser ist.

Die vertikale Höhe der Schüttgutabführschächte 23 kann frei gewählt werden, so dass die Höhe des Anströmkastens 25 frei wählbar ist; diese Wahl erfolgt unter Berücksichtigung der Querschnittsgrösse des Behälters 11, der Anzahl und Verteilung der Fluidzuführrohre in den Anströmkasten 25 sowie maximalen schnittbezogenen Fluidströmungsrate-und zwar in dem Sinne, dass innerhalb des Anströmkastens 25 kein spürbares Druckgefälle entsteht, dass zumindest der Fluiddruck im Bereich aller Fluideinlassschlitze im wesentlichen gleich gross ist.

Eine Fluiddurchströmung der Schüttgutabzugsöffnungen 18 kann durch Unterteilung der Schüttgutabführschächte 23 in zwei im wesentlichen vertikal übereinander angeordnete Teilbereiche 23' und 23" erreicht werden, die zwischen sich Fluidzuströmöffnungen 26 freilassen, die den Fluideinlassschlitzen 21 entsprechen. Der untere Teilbereich 23' der Schüttgutabführschächte 23 erweitert sich in seinem oberen Mündungsbereich trichterförmig, z. B. durch schräg angesetzte Flachstäbe 20', die den Flachstäben 20 der Trichterwände 19 entsprechen. Gegen diese Flachstäbe 20' stützen sich die im Bereich der Fluidzuströmöffnung öffnung 26 ausbildenden Schüttkegel 27 des Schüttgutes 10 ab.

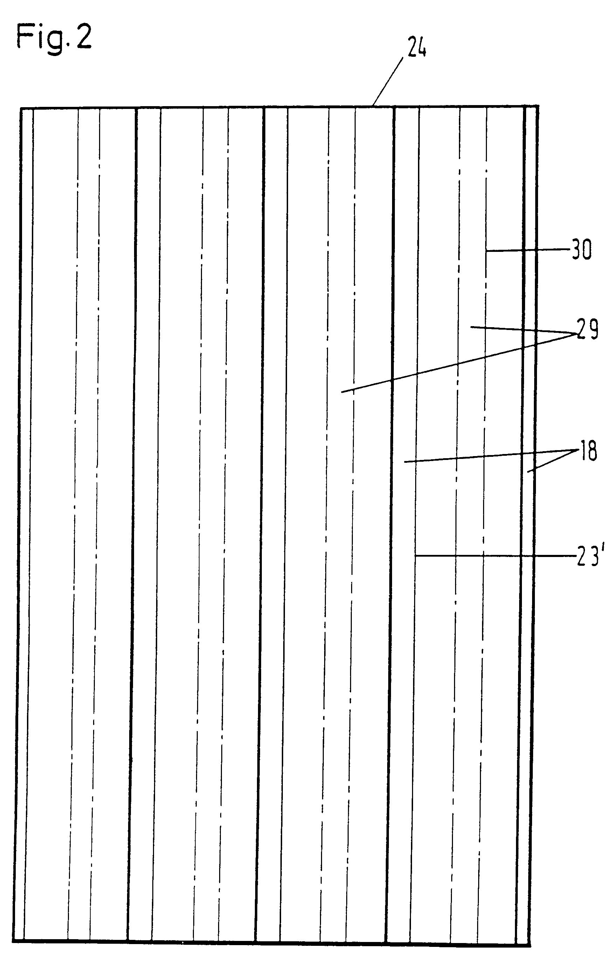

Unmittelbar oberhalb des Fluidabführrohres 15 ist ein Schüttgutverteilboden 28 angeordnet, der über den gesamten Behälterquerschnitt rasterförmig verteilte Öffnungen für das Zuteilen des Schüttgutes (Zuteilöffnungen) 29 aufweist. Der Schüttgutverteilboden 28 kann - wie mit durchgezogener Linie dargestellt - eben sein, er kann aber auch trichter- bzw. rinnenförmig ausgeführt sein - wie mit strichpunktierten Linien dargestellt, so dass das Schüttgut 10 den Zuteilöffnungen gezielt zugeführt wird. In der Regel reicht aber ein völlig ebener Schüttgutverteilboden 28 aus, weil sich über den ebenen Flächen ruhende Schüttgutkegel von selbst ausbilden, an deren Kegelflächen Schüttgutpartikel nach unten den Zuteilöffnungen 29 selbsttätig zugeleitet werden. Diese Schüttgutkegel entsprechen den strichpunktierten Linien in der Zeichnung. Der Übersichtlichkeit halber sind aber keine Schüttgutpartikel in diese Kegel eingezeichnet worden. Ebenso sind in anderen Teilbereichen des Behälters 10 der Übersichtlichkeit halber keine Schüttgutpartikel eingezeichnet worden, obgleich sich dort natürlich solche befinden. In der Fig. 1 sind die Zuteilöffnungen 29 längs des Behälters verlaufende parallele Schlitze, die in Fig. 2 strichpunktiert dargestellt sind. An die Ränder dieser Zuteilöffnungen 29 schliessen sich nach unten gerichtete Schüttgutzuteilrohre bzw. Schüttgutzuteilschächte 30 an, die alle im gleichen Abstand über dem Anströmboden 16 frei enden. Die durch die Schüttgutzuteilschächte 30 fallenden Schüttgutpartikel bilden Schüttkegel 31, deren Schüttkegelspitzen oder -firste 32 im Betrieb des Wanderbettreaktors von der unteren Mündungsöffnung der Schüttgutzuteilrohre oder Schächte 30 gebildet werden. Der Schüttgutverteilboden 28, die entsprechenden Seitenwandbereiche des Behälters 11 sowie die freien Flächen der Schüttgutkegel 31 definieren also einen einheitlichen Abströmraum 33, dessen Höhe von der Länge der Schüttgutzuteilrohre oder -schächte 30 nach im wesentlichen den gleichen Kriterien festgelegt wird wie die Höhe des Anströmkastens 25.

Wie sich aus Fig. 1 in Verbindung mit Fig. 2 ergibt, münden die Schüttgutzuteilschächte 30 in der vertikal nach unten gerichteten Wanderrichtung des Schüttgutes 10 genau oberhalb der Dachfirste 22 des Anströmbodens 16; die Schichthöhe a der wirksamen Wanderschicht 34 ist also über den gesamten Behälterquerschnitt im wesentlichen gleich hoch, da unmittelbar über einem Dachfirst 22 ein Schüttkegelfirst 32 und unmittelbar über einer Abzugsöffnung 18 eine Schüttgutsenke 35 liegt.

Eine oberhalb des Schüttgutverteilbodens 28 im Wanderbettreaktorangeordnete Schüttgutschleusenkammer 36 dient als Schüttgutvorlage, die die Einlassöffnung 12 mit einer vorgeschalteten Zellenradschleuse 37 aufweist.

Die Schüttgutabführschächte 23' münden in einer unterhalb des Bodens 24 des Anströmkastens 25 angeordneten Schüttgutschleusenkammer 38 dicht oberhalb eines Horizontalförderers 39, insbesondere eines Förderbandes mit variabler Fördergeschwindigkeit, der völlig in der Schüttgutschleusenkammer 38 untergebracht ist und das abtransportierte Schüttgut in einen Trichter 40 oberhalb der Auslassöffnung 13 abwirft, an den sich nach unten eine Zellenradschleuse anschliesst.

Eine dem Fluidabführrohr 15 nachgeordnete an sich bekannte Fluidpumpe 42 zur Aufrechterhaltung der Fluidströmung in der Wanderschicht ist in Fig. 1 gestrichelt dargestellt.

Für den Fall, dass es sich bei dem Fluid um ein Gas handelt, kann der Anströmkasten 25 als Windkasten und der Abströmraum 33 als Gassammelraum bezeichnet werden.

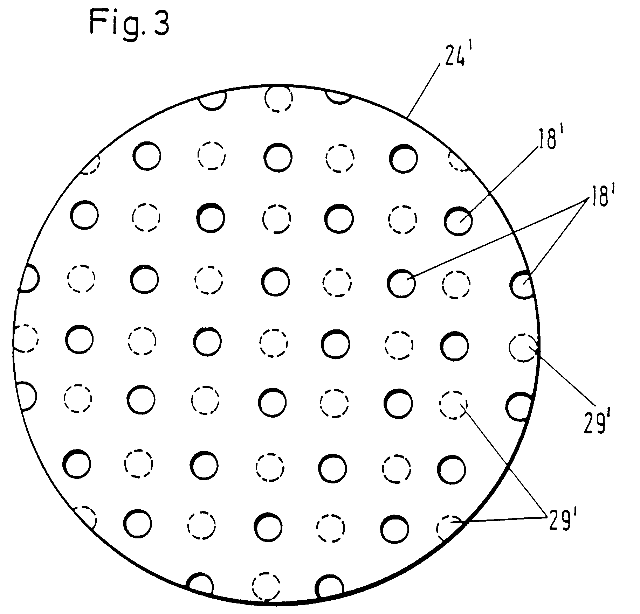

In Fig. 3 ist der Boden 24' eines runden Wanderbettreaktors dargestellt, dessen Abzugsöffnungen 18' auf Lücke zu den gestrichelt dargestellten Zuteilöffnungen 29' angeordnet sind.

Ein erfindungsgemässer Wanderbettreaktor kann sowohl bei sehr kleinen als auch bei relativ hohen Fluidgeschwindigkeiten (bis kurz unterhalb des Wirbelpunktes) erfolgreich eingesetzt werden; dies ist vor allem bei Kraftwerken mit grossen Lastschwankungen wichtig.

### Bezugszeichenliste:

10 Schüttgut
11 Behälter
12 Einlassöffnung
13 Auslassöffnung
14 Fluidzuführrohr
15 Fluidabführrohr
16 Anströmboden
17 Rinnen
18 Öffnungen (Abzugs-)
18' Abzugsöffnungen
19 Trichterwände
20 Flachstäbe
21 Fluideinlassschlitze
22 Dachfirst
23 Schüttgutabführschächte
23' Teilbereiche
23" Teilbereiche
24 Boden
24' Boden
25 Anströmkasten
26 Fluidzuströmöffnungen
27 Schüttkegel
28 Schüttgutverteilboden
29 Zuteilöffnungen
29' Zuteilöffnungen
30 Schüttgutzuteilschächte
31 Schüttkegel
32 Schüttkegelfirste
33 Abströmraum
34 Wanderschicht
35 Schüttgutsenke
36 Schüttgutschleusenkammer
37 Zellenradschleuse
38 Schüttgutschleusenkammer
39 Horizontalförderer
40 Trichter
41 Zellenradschleuse A Ansicht
42 Fluidpumpe a Schichthöhe

## Patentansprüche

1. Wanderbettreaktor zum Behandeln von Fluiden mittels eines Schüttgutes im Gegenstromverfahren, bei dem das Schüttgut von oben nach unten wandert und das Fluid kontinuierlich von unten nach oben strömt; bestehend aus
a) einem mit dem Schüttgut gefüllten, im wesentlichen geraden Behälter (11) mit mindestens einer deckseitigen verschliessbaren Einlassöffnung (12) zum Zuführen des Schüttgutes (10) und mindestens einer bodenseitigen verschliessbaren Auslassöffnung (13) zum Abführen des Schüttgutes (10) sowie einem Fluidzuführrohr (14) und einem Fluidabführrohr (15),
b) einem Anströmboden (16) oberhalb des Fluidzuführrohres (14) mit über den Behälterquerschnitt rasterförmig verteilten, Dächer bildenden Trichtern oder Rinnen (17) mit fluiddurchlässige Öffnungen aufweisenden Trichter wänden und mit bodenseitigen Öffnungen und mit bodenseitigen Öffnungen (Abzugsöffnungen) (18) für das Abziehen des Schüttgutes (10), und
c) einem Schüttgutverteilboden (28) unmittelbar oberhalb des Fluidabführrohres (15) mit über den Behälterquerschnitt rasterförmig verteilten Öffnungen für das Zuteilen (Zuteilöffnungen) (29) des Schüttgutes (10), bei dem
d) an die Zuteilöffnungen (29) Schüttgutzuteilrohre oder-schächte (30) angesetzt sind, die in gleichem Abstand über dem Anströmboden (16) enden und deren untere Mündungsöffnungen Schüttkegelspitzen oder -firste (32) der Wanderschicht (34) definieren, wobei die Unterseite des Schüttgutverteilbodens (28) zusammen mit den Schüttgutzuteilrohren oder-schächten (30) einen Abströmraum (33) definieren, dadurch gekennzeichnet, dass
e) die Schüttgutzuteilrohre oder-schächte (30) in der Wanderrichtung des Schüttgutes (10) gesehen oberhalb der Dachspitzen oder -firsten (22) der Dächer des Anströmbodens (16) münden, wobei die Schichthöhe (a) derwirksamen Wanderschicht (34) über den gesamten Behälterquerschnitt im wesentlichen gleich hoch ist.

2. Wanderbettreaktor nach Anspruch 1 dadurch gekennzeichnet, dass an die Trichter oder Rinnen (17) des Anströmbodens (16) Schüttgutabführrohre oder -schächte (23 bzw. 23', 23") angesetzt und durch einen fluiddichten, unterhalb des Fluidzuführrohres (14) in dem Behälter (11) angeordneten Boden (24) geführt sind, wobei die Unterseite des Anströmbodens (16) zusammen mit dem Boden (24) und angrenzenden Seitenwandbereichen einen Anströmkasten (25) definieren.

3. Wanderbettreaktor nach Anspruch 1 oder 2, dadurch gekennzeichnet, dass die Schüttgutabführrohre oder -schächte (23) zwei im wesentlichen vertikal übereinander angeordnete, zwischen sich Fluidzuströmöffnungen (26) freilassende, Teilbereiche (23' und 23") aufweisen, von denen die unteren Teilbereiche (23') sich nach oben trichterförmig erweitern.

4. Wanderbettreaktor nach einem der Ansprüche 1 bis 3, dadurch gekennzeichnet, dass oberhalb des Schüttgutverteilbodens (28) eine Schüttgutschleusenkammer (36) angeordnet ist.

5. Wanderbettreaktor nach einem der Ansprüche 1 bis 4, dadurch gekennzeichnet, dass die Schüttgutabführrohre oder schächte (23; 23', 23") in einer unterhalb des Bodens (24) des Anströmkastens (25) angeordneten Schüttgutschleusenkammer (38) münden.

6. Wanderbettreaktor nach einem der Ansprüche 1 bis 5, dadurch gekennzeichnet, dass die Schüttgutabführrohre oder -schächte (23; 23', 23") dicht oberhalb eines Horizontalförderers (39) münden.

7. Wanderbettreaktor nach einem der Ansprüche 1 bis 6, dadurch gekennzeichnet, dass eine Fluidpumpe (42) zur Aufrechterhaltung der Fluidströmung im Wanderschichtreaktor in dem Fluidabführrohr (15) angeordnet ist.

## Claims

1. A moving bed reactor for treating fluids by means of a bulk material in the counterflow process, in which the bulk material moves downwards from above and the fluid flows continuously upwards from below, comprising
a) a substantially upright container (11) filled with the bulk material and having at least one closable inlet opening (12) on the cover for supplying the bulk material (10) and at least one closable outlet opening (13) on the floor for removing the bulk material (10) and a fluid supply pipe (14) and a fluid removal pipe (15),
b) an inflow floor (16) above the fluid supply pipe (14) with funnels or channels (17) forming roofs distributed in a grid pattern over the cross-section of the container and having funnel-walls forming fluid- permeable openings and with openings (discharge openings) (18) on the floor for the discharge of the bulk material (10), and
c) a bulk-material distribution floor (28) immediately above the fluid removal pipe (15) with openings distributed in a grid pattern over the cross-section of the container for the feed (feed openings) (29) of the bulk material (10), in which
d) the feed openings (29) have attached to them bulk-material feed pipes or chutes (30) which terminate at the same distance above the inflow floor (16) and the lower exit openings of which define the tips or ridges (32) of the heap of the moving layer (34), the underside of the bulk-material distribution floor (28) together with the bulk-material feed pipes or chutes (30) defining an outflow space (33), characterized in that
e) the bulk-material feed pipes or chutes (30) as viewed in the direction of movement of the bulk material (10) open above tips or ridges (22) of the roofs of the inflow floor (16), whereby the height (a) of the effective moving layer (34) is substantially equally high over the entire cross-section of the container.

2. A moving bed reactor according to Claim 1, characterized in that bulk-material removal pipes or chutes (23 or23', 23" respectively) are joined to the funnels or channels (17) of the inflow floor (16) and are guided through a fluid-tight floor (24) arranged below the fluid-supply pipe (14) in the container (11), the underside of the inflow floor (16) together with the floor (24) and adjacent side-wall areas defining an inflow box (25).

3. A moving bed reactor according to Claim 1 or 2, characterized in that bulk-material removal pipes or chutes (23) comprise two partial areas (23' and 23") arranged substantially vertically one above the other and leaving fluid-supply openings (26) between themselves, and of which the lower partial areas (23') are enlarged upwards in the form of funnels.

4. A moving bed reactor according to any one of Claims 1 to 3, characterized in that a bulk-material lock chamber (36) is arranged above the bulk-material distribution floor (28).

5. A moving bed reactor according to any one of Claims 1 to 4, characterized in that the bulk-material removal pipes or chutes (23; 23', 23") open into a bulk-material lock chamber (38) arranged below the floor (24) of the inflow box (25).

6. A moving bed reactor according to any one of Claims 1 to 5, characterized in that the bulk-material removal pipes or chutes (23; 23', 23") open closely above a horizontal conveyor (39).

7. A moving bed reactor according to any one of Claims 1 to 6, characterized in that a fluid pump (42) for maintaining the fluid flow in the moving bed reactor is arranged in the fluid-removal pipe (15).

## Revendications

1. Réacteur à lit mobile pour le traitement de fluides au moyen d'une matière pulvérulente, en contre-courant, dans lequel la matière pulvérulente se déplace de haut en bas, et le fluide flue en continu de bas en haut, comportant:
a) une cuve (11), à peu près droite, remplie de la mati-re pulvérulente, avec au moins une ouverture d'entrée (12) placée à la partie supérieure et pouvant être fermée, pour l'alimentation de la matière pulvérulente (10), et au moins une ouverture de sortie (13) placée sur le fond et pouvant être fermée, pour l'évacuation de la matière pulvérulente (10), ainsi qu'un tube d'alimentation du fluide (14) et un tube d'évacuation du fluide (15),
b) un fond d'arrivée (16) placé au-dessus du tube d'alimentation du fluide (14), avec des trémies ou des rigoles (17) pour former des toits répartis sur la section transversale de la cuve, pour former une trame, et formant des parois a trémies avec des ouvertures laissant passer le fluide, avec des ouvertures (ouvertures d'extraction 18), placées sur le fond pour l'extraction de la matière pulvérulente (10), et
c) un fond de répartition de la matière pulvérulente (28) situé directement au-dessus du tube d'évacuation du fluide (15), avec des ouvertures réparties pour former une trame, sur la section transversale de la cuve, destinées à la distribution (ouvertures de distribution 29) de la matière pulvérulente (10) dans lequel
d) des tubes ou des puits de distribution de la matière pulvérulente (30) sont placés sur les ouvertures de distribution (29) et se terminent à une même distance au-dessus du fond d'arrivée (16), et dont les embouchures inférieures définissent des sommets ou des faîtes (32) de cônes de déversement de la couche mobile (34), la face inférieure du fond de répartition de la matière pulvérulente (28) définissant un volume d'écoulement de sortie (33), avec les tubes ou les puits (30) de distribution de la matière pulvérulente,
caractérisé en ce que
e) les tubes ou puits (30) de distribution de la matière pulvérulente débouchent, vue dans la direction de déplacement de la matière pulvérulente (10), au-dessus des sommets ou des faîtes (22) des toits du fond d'arrivée (16), près de quoi la hauteur (a) de la couche mobile (34) efficace a à peu près la même hauteur sur toute la section transversale de la cuve.

2. Réacteur à lit mobile selon la revendication 1, caractérisé en ce que des tubes ou des puits d'évacuation de la matière pulvérulente (23 ou 23', 23") sont placés sur les trémies ou les rigoles (17) du fond d'arrivée (16), et traversent un fond (24) étanche au fluide, placé au-dessous du tube d'alimentation du fluide (14) dans la cuve (11), la face inférieure du fond d'arrivée (16) définissant un caisson d'arrivée (25) avec le fond (24) et les zones adjacentes des parois latérales.

3. Réacteur à lit mobile selon la revendication 1 ou 2, caractérisé en ce que les tubes ou les puits (23) d'évacuation de la matière pulvérulente présentent deux zones partielles (23' ou 23") à peu près superposées verticalement, laissant entre elles des ouvertures d'alimentation du fluide (26), dont les zones partielles (23') inférieures s'élargissent vers le haut en forme d'entonnoir.

4. Réacteur à lit mobile selon l'une des revendications 1 à 3, caractérisé en ce qu'un sas de matière pulvérulente (36) est placé au-dessus du fond de répartition de la matière pulvérulente (28).

5. Réacteur à lit mobile selon l'une des revendications 1 à 4, caractérisé en ce que les tubes ou les puits d'évacuation de la matière pulvérulente (23; 23', 23") débouchent dans un sas (38) placé au-dessous du fond (24) du caisson d'arrivée (25).

6. Réacteur à lit mobile selon l'une des revendications 1 à 5, caractérisé en ce que les tubes ou les puits d'évacuation de la matière pulvérulente (23; 23', 23") débouchent juste au-dessus d'un convoyeur horizontal (39).

7. Réacteur à lit mobile selon l'une des revendications 1 à 6, caractérisé en ce qu'une pompe à fluide (42) est placée dans le tube d'évacuation du fluide (15), pour maintenir la circulation du fluide dans le réacteur à lit mobile.
